# NEUE EUROPÄISCHE PATENTSCHRIFT

(11) **EP 1 937 996 B2**
(45) Veröffentlichungstag und Bekanntmachung des Hinweises auf die Entscheidung über den Einspruch: **23.01.2019**
(45) Hinweis auf die Patenterteilung: 31.03.2010
(21) Anmeldenummer: 06805292.7
(22) Anmeldetag: 16.09.2006
(51) Int. Cl.: F16F 15/131

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 11.10.2005 DE 102005048617
(43) Veröffentlichungstag der Anmeldung: 02.07.2008
(73) Patentinhaber: Schaeffler Technologies AG & Co. KG, 91074 Herzogenaurach (DE)
(72) Erfinder: HIMMELREICH, Peter, 77948 Friesenheim (DE); LIPPS, Michael, 77767 Urloffen (DE)
(74) Vertreter: Wallinger, Michael
(86) Internationale Anmeldenummer: PCT/DE2006/001630
(87) Internationale Veröffentlichungsnummer: WO 2007/041980

(56) Entgegenhaltungen:
- EP-A- 1 637 766
- EP-A2- 1 571 031
- DE-A1- 4 113 287
- DE-A1-102005 003 508
- FR-A1- 2 844 856

## Beschreibung

Die Erfindung betrifft eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, die mit Hilfe einer Kupplungseinrichtung unter Zwischenschaltung einer Drehschwingungsdämpfungseinrichtung, die eine Primärschwungmasse und eine Sekundärschwungmasse umfasst, mit der Abtriebswelle der Antriebseinheit koppelbar ist.

Aus der DE 4 113 287 A1 ist eine gattungsgemäße Drehmomentenübertragungseinrichtung bekannt. Eine weitere Einrichtung zeigt die EP 1 637 766 A1, die zum Stand der Technik nach Artikel 54(3) EPü gehört.

Aufgabe der Erfindung ist es, eine derartige Drehmomentübertragungseinrichtung zu schaffen, die einfach aufgebaut und kostengünstig herstellbar ist.

Die Aufgabe ist bei einer Drehmomentübertragungseinrichtung mit den Merkmalen des Anspruchs 1 gelöst. Vorzugsweise ist eine Lagereinrichtung, wie zum Beispiel ein Wälzlager, radial innerhalb von und in axialer Richtung überlappend zu einem Ausgangsflansch der Drehschwingungsdämpfungseinrichtung angeordnet.

Eine erfindungsgemäße Drehmomentübertragungseinrichtung ist dadurch gekennzeichnet, dass die Primärschwungmasse über ein topfförmiges Mitnehmerblech mit einem Antriebsblech gekoppelt ist, das an der Abtriebswelle der Antriebseinheit befestigbar ist. Das topfförmige Mitnehmerblech ermöglicht einen größeren Abstand zwischen der Antriebseinheit und dem Getriebe in axialer Richtung.

Weiterhin ist eine erfindungsgemäße Drehmomentübertragungseinrichtung dadurch gekennzeichnet, dass die Primärschwungmasse und das Mitnehmerblech an zwei Stirnseiten eines ringförmigen Verbindungselements befestigt sind. Vorzugsweise sind die Primärschwungmasse und das Mitnehmerblech mit Hilfe von Nietverbindungselementen an dem Verbindungselement befestigt.

Eine erfindungsgemäße Drehmomentübertragungseinrichtung ist dadurch gekennzeichnet, dass die Primärschwungmasse radial innen an der dem Getriebe zugewandten Stirnseite des Verbindungselements befestigt ist. Die Primärschwungmasse hat im Wesentlichen die Gestalt einer Kreisringscheibe.

Eine erfindungsgemäße Drehmomentübertragungseinrichtung ist dadurch gekennzeichnet, dass an der dem Getriebe zugewandten Stirnseite des Verbindungselements radial außen eine Stufe zur Aufnahme eines radial inneren Umfangsrandes der Primärschwungmasse vorgesehen ist. Dadurch wird die Montage erleichtert.

Ein weiteres bevorzugtes Ausführungsbeispiel der Drehmomentübertragungseinrichtung ist dadurch gekennzeichnet, dass an der dem Getriebe zugewandten Stirnseite des Verbindungselements radial innen eine Stufe vorgesehen ist. Diese Stufe ermöglicht eine Überprüfung der Torsionskennlinie der Drehschwingungsdämpfungseinrichtung vor der Montage in der Fertigung.

Ein weiteres bevorzugtes Ausführungsbeispiel der Drehmomentübertragungseinrichtung ist dadurch gekennzeichnet, dass an dem Verbindungselement radial innen eine Zentriernase vorgesehen ist. Die Zentriernase dient dazu, das Verbindungselement bei der Montage auf einem mit der Abtriebswelle der Antriebseinheit verbundenen Lagerdorn vorzuzentrieren.

Eine erfindungsgemäße Drehmomentübertragungseinrichtung ist dadurch gekennzeichnet, dass an der dem Getriebe abgewandten Stirnseite des Verbindungselements radial außen eine Stufe zur Aufnahme eines radial inneren Umfangsrandes des Mitnehmerblechs vorgesehen ist. Dadurch wird die Montage erleichtert.

Ein weiteres bevorzugtes Ausführungsbeispiel der Drehmomentübertragungseinrichtung ist dadurch gekennzeichnet, dass das Mitnehmerblech radial innen und außen jeweils einen im Wesentlichen kreisringscheibenförmigen Befestigungsflansch aufweist. Der radial äußere Befestigungsflansch dient dazu, das Mitnehmerblech an einem Antriebsblech zu befestigen, das wiederum radial innen an der Abtriebswelle der Antriebseinheit befestigt ist.

Ein weiteres bevorzugtes Ausführungsbeispiel der Drehmomentübertragungseinrichtung ist dadurch gekennzeichnet, dass die beiden Befestigungsflansche in axialer Richtung voneinander beabstandet sind. Durch den axialen Abstand zwischen den Befestigungsflanschen kann der axiale Abstand zwischen der Antriebseinheit und dem Getriebe variiert werden.

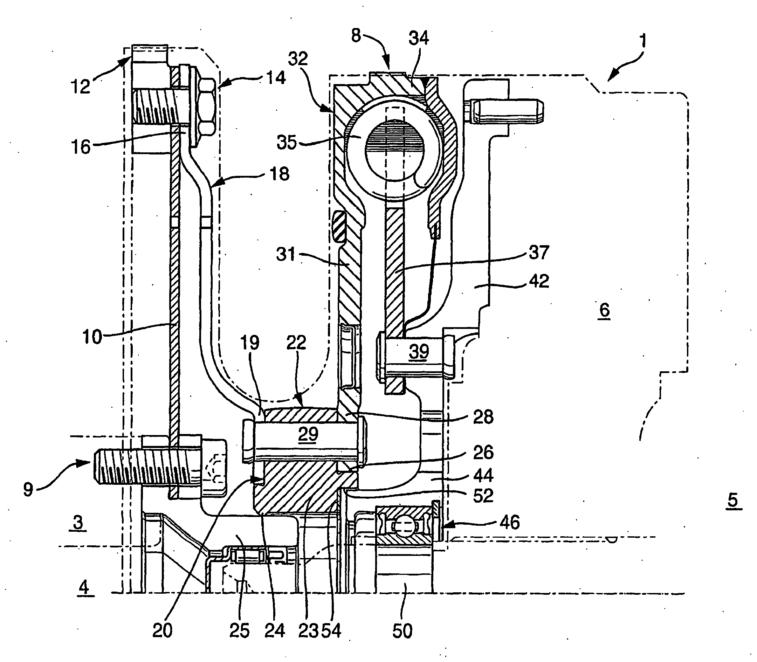

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist.

Die beiliegende Figur zeigt einen Halbschnitt durch eine erfindungsgemäße Drehmomentübertragungseinrichtung.

In der beiliegenden Figur ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine Kupplung 6 angeordnet. Zwischen die Antriebseinheit 3 und die Kupplung 6 ist eine Schwingungsdämpfungseinrichtung 8 geschaltet. Bei der Schwingungsdämpfungseinrichtung 8 handelt es sich um ein Zweimassenschwungrad. Die Kurbelwelle 4 der Brennkraftmaschine 3 ist über Schraubverbindungen 9 fest mit einem Antriebsblech 10 verbunden, das im Wesentlichen die Gestalt einer sich in radialer Richtung erstreckenden Kreisringscheibe aufweist. Das Antriebsblech 10 wird auch als Flexplate bezeichnet. Radial außen ist an dem Antriebsblech 10 ein Anlasserzahnkranz 12 vorgesehen.

An dem radial äußeren Umfangsbereich des Antriebsblechs 10 ist mit Hilfe von Schraubverbindungen 14 ein Befestigungsflansch 16 eines topfförmigen Mitnehmerblechs 18 befestigt. Radial innen weist das Mitnehmerblech 18 einen Befestigungsflansch 19 auf. Der Befestigungsflansch 19 ist auf eine Stufe 20 aufgesetzt, die auf einer dem Getriebe 5 abgewandten Stirnseite eines Verbindungselements 22 ausgebildet ist. Das Verbindungselement 22 hat die Gestalt eines Ringkörpers 23, an dem radial innen eine umlaufende Zentriernase 24 vorsteht. Die Zentriernase 24 befindet sich in Anlage an einem Lagerdorn 25, der von der Kurbelwelle 4 der Antriebseinheit 3 ausgeht.

Auf der dem Getriebe 5 zugewandten Stirnseite des Verbindungselements 22 ist eine Stufe 26 ausgebildet, die zur Aufnahme eines Befestigungsflansches 28 dient. Der Befestigungsflansch 28 ist mit Hilfe von Nietverbindungselementen 29 zusammen mit dem Befestigungsflansch 19 an dem Verbindungselement 22 befestigt. Der Befestigungsflansch 28 ist Teil einer Primärschwungmasse 31 eines Eingangsteils 32 der Drehschwingungsdämpfungseinrichtung 8. Das Eingangsteil 32 der Drehschwingungsdämpfungseinrichtung 8 hat im Wesentlichen die Gestalt einer sich in radialer Richtung erstreckenden Kreisringscheibe, die radial außen einen Schwingungsdämpferkäfig 34 bildet. In dem Schwingungsdämpferkäfig 34 ist mindestens eine Energiespeichereinrichtung, insbesondere eine Federeinrichtung 35, zumindest teilweise aufgenommen. In die Federeinrichtung 35 greift ein Ausgangsteil 37, das auch als Ausgangsflansch bezeichnet wird, der Drehschwingungsdämpfungseinrichtung 8 ein.

Radial innen ist an dem Ausgangsteil 37 mit Hilfe von Nietverbindungselementen 39 eine Sekundärschwungmasse 42 der Drehschwingungsdämpfungseinrichtung 8 befestigt. Die Sekundärschwungmasse 42 ist radial innen einstückig mit einer Nabe 44 verbunden. Die Nabe 44 der Sekundärschwungmasse 42 ist mit Hilfe eines Wälzlagers 46 auf einer Getriebeeingangswelle 50 des Getriebes 5 gelagert. Bei dem Wälzlager 46 handelt es sich vorzugsweise um ein Kugellager.

An der dem Getriebe 5 zugewandten Stirnseite des Verbindungselements 22 ist radial innen eine Stufe 52 ausgebildet, die vor der Montage der Drehschwingungsdämpfungseinrichtung 8 zur drehbaren Lagerung der Nabe 44 verwendet wird. Zu diesem Zweck ist in der Stufe 52 ein axialer Anlaufring 54 aufgenommen. An dem axialen Anlaufring 54 kommt die Nabe 44 vor der Montage zur Anlage, um die Torsionskennlinie der Drehschwingungsdämpfungseinrichtung 8 in der Fertigung zu messen. Im montierten Zustand der Drehschwingungsdämpfungseinrichtung 8 hat die Stufe 52 an dem Verbindungselement 22 keine Funktion.

### Bezuaszeichenliste

1. Antriebsstrang
3. Antriebseinheit
4. Kurbelwelle
5. Getriebe
6. Kupplung
8. Schwingungsdämpfungseinrichtung
9. Schraubverbindung
10. Antriebsblech
12. Anlasserzahnkranz
14. Schraubverbindung
16. Befestigungsflansch
18. Mitnehmerblech
19. Befestigungsflansch
20. Stufe
22. Verbindungselement
23. Ringkörper
24. Zentriernase
26. Stufe
28. Befestigungsflansch
29. Nietverbindungselement
31. Primärschwungmasse
32. Eingangsteil
34. Schwingungsdämpferkäfig
35. Federeinrichtung
37. Ausgangsteil
39. Nietverbindungselement
42. Sekundärschwungmasse
44. Nabe
46. Wälzlager
50. Getriebeeingangswelle
52. Stufe
54. axialer Anlaufring

## Patentansprüche

1. Drehmomentübertragungseinrichtung mit einer Drehschwingungsdämpfungseinrichtung und einer Kupplungseinrichtung für einen Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit mindestens einer Getriebeeingangswelle (50), die mit Hilfe der Kupplungseinrichtung (6) unter Zwischenschaltung der Drehschwingungsdämpfungseinrichtung (8), die eine Primärschwungmasse (31) und eine Sekundärschwungmasse (42) umfasst, mit der Abtriebswelle (4) der Antriebseinheit (3) koppelbar ist, wobei die Primärschwungmasse (31) und die Sekundärschwungmasse (42) der Drehschwingungsdämpfungseinrichtung (8) zusammen mit der Kupplungseinrichtung (6) auf der Getriebeeingangswelle (50) lagerbar sind,
**dadurch gekennzeichnet, dass** die Primärschwungmasse (31) über ein topfförmiges Mitnehmerblech (18) mit einem Antriebsblech (10) gekoppelt ist, das an der Abtriebswelle (4) der Antriebseinheit (3) befestigbar ist, und
die Primärschwungmasse (31) und das Mitnehmerblech (18) an zwei Stirnseiten eines ringförmigen Verbindungselements (22) befestigt sind, wobei
die Primärschwungmasse (31) radial innen an der dem Getriebe (5) zugewandten Stirnseite des Verbindungselements (22) befestigt ist, wobei
an der dem Getriebe (5) zugewandten Stirnseite des Verbindungselements (22) radial außen eine Stufe (26) zur Aufnahme eines radial inneren Umfangsrandes der Primärschwungmasse (31) vorgesehen ist, wobei
an der dem Getriebe (5) abgewandten Stirnseite des Verbindungselements (22) radial außen eine Stufe (20) zur Aufnahme eines radial inneren Umfangsrandes des Mitnehmerblechs (18) vorgesehen ist.

2. Drehmomentübertragungseinrichtung nach Anspruch 1, **dadurch gekennzeichnet, dass** an der dem Getriebe (5) zugewandten Stirnseite des Verbindungselements (22) radial innen eine Stufe (52) vorgesehen ist.

3. Drehmomentübertragungseinrichtung nach einem der Ansprüche 1 oder 2, **dadurch gekennzeichnet, dass** an dem Verbindungselement (22) radial innen eine Zentriernase (24) vorgesehen ist.

4. Drehmomentübertragungseinrichtung nach einem der Ansprüche 1 bis 3, **dadurch gekennzeichnet, dass** das Mitnehmerblech (18) radial innen und außen jeweils einen im Wesentlichen kreisringscheibenförmigen Befestigungsflansch (19,16) aufweist.

5. Drehmomentübertragungseinrichtung nach Anspruch 4, **dadurch gekennzeichnet, dass** die beiden Befestigungsflansche (19,16) in axialer Richtung voneinander beabstandet sind.

## Claims

1. Torque transmission device, having a rotary vibration damping device and having a clutch device, for a drivetrain (1) of a motor vehicle for transmitting torque between a drive unit (3), in particular an internal combustion engine having a drive output shaft (4), in particular crankshaft, and a gearbox (5) having at least one gearbox input shaft (50) which can be coupled to the drive output shaft (4) of the drive unit (3) by means of the clutch device (6) with the interposition of the rotary vibration damping device (8) which comprises a primary flywheel mass (31) and a secondary flywheel mass (42), with it being possible for the primary flywheel mass (31) and the secondary flywheel mass (42) of the rotary vibration damping device (8) to be mounted together with the clutch device (6) on the gearbox input shaft (50), **characterized in that** the primary flywheel mass (31) is coupled by means of a pot-shaped driver plate (18) to a drive input plate (10) which can be fastened to the drive output shaft (4) of the drive unit (3), and the primary flywheel mass (31) and the driver plate (18) are fastened at two end sides of an annular connecting element (22), wherein
the primary flywheel mass (31) is fastened radially at the inside to that end side of the connecting element (22) which faces towards the gearbox (5), wherein
a step (26) for receiving a radially inner circumferential edge of the primary flywheel mass (31) is provided radially at the outside on that end side of the connecting element (22) which faces towards the gearbox (5), wherein
a step (20) for receiving a radially inner circumferential edge of the driver plate (18) is provided radially at the outside on that end side of the connecting element (22) which faces away from the gearbox (5).

2. Torque transmission device according to Claim 1, **characterized in that** a step (52) is provided radially at the inside on that end side of the connecting element (22) which faces towards the gearbox (5).

3. Torque transmission device according to one of Claims 1 or 2, **characterized in that** a centring lug (24) is provided on the connecting element (22) radially at the inside.

4. Torque transmission device according to one of Claims 1 to 3, **characterized in that** the driver plate (18) has in each case one substantially annular disc-shaped fastening flange (19, 16) radially at the inside and radially at the outside.

5. Torque transmission device according to Claim 4, **characterized in that** the two fastening flanges (19, 16) are spaced apart from one another in the axial direction.

## Revendications

1. Dispositif de transmission de couple comprenant un dispositif d'amortissement des oscillations de torsion et un dispositif d'embrayage pour une chaîne de transmission (1) d'un véhicule automobile pour le transfert de couple entre une unité d'entraînement (3), notamment d'un moteur à combustion interne, avec un arbre de sortie (4), en particulier un vilebrequin, et une boîte de vitesses (5), avec au moins un arbre d'entrée de boîte de vitesses (50), qui peut être accouplé à l'arbre de sortie (4) de l'unité d'entraînement (3) à l'aide du dispositif d'embrayage (6) en interposant le dispositif d'amortissement des oscillations de torsion (8), qui comprend une masse d'inertie primaire (31) et une masse d'inertie secondaire (42), la masse d'inertie primaire (31) et la masse d'inertie secondaire (42) du dispositif d'amortissement des oscillations de torsion (8) pouvant être montées conjointement avec le dispositif d'embrayage (6) sur l'arbre d'entrée de boîte de vitesses (50),
**caractérisé en ce que**
la masse d'inertie primaire (31) est accouplée par le biais d'une tôle de dispositif d'entraînement en forme de pot (18) à une tôle d'entraînement (10) qui peut être fixée à l'arbre de sortie (4) de l'unité d'entraînement (3), et
la masse d'inertie primaire (31) et la tôle de dispositif d'entraînement (18) sont fixées à deux côtés frontaux d'un élément de connexion de forme annulaire (22),
la masse d'inertie primaire (31) étant fixée radialement à l'intérieur au côté frontal de l'élément de connexion (22) tourné vers la boîte de vitesses (5),
un étage (26) pour recevoir un bord périphérique radialement interne de la masse d'inertie primaire (31) étant prévue radialement à l'extérieur sur le côté frontal de l'élément de connexion (22) tourné vers la boîte de vitesses (5),
un étage (20) pour recevoir un bord périphérique radialement interne de la tôle de dispositif d'entraînement (18) étant prévu radialement à l'extérieur sur le côté frontal de l'élément de connexion (22) opposé à la boîte de vitesses (5).

2. Dispositif de transmission de couple selon la revendication 1, **caractérisé en ce qu'**un étage (52) est prévu radialement à l'intérieur du côté frontal de l'élément de connexion (22) tourné vers la boîte de vitesses (5).

3. Dispositif de transmission de couple selon l'une quelconque des revendications 1 ou 2, **caractérisé en ce qu'**une masse de centrage (24) est prévue radialement à l'intérieur sur l'élément de connexion (22).

4. Dispositif de transmission de couple selon l'une quelconque des revendications 1 à 3, **caractérisé en ce que** la tôle de dispositif d'entraînement (18) présente, radialement à l'intérieur et à l'extérieur à chaque fois une bride de fixation (19, 16) essentiellement en forme de disque annulaire circulaire.

5. Dispositif de transmission de couple selon la revendication 4, **caractérisé en ce que** les deux brides de fixation (19, 16) sont espacées l'une de l'autre dans la direction axiale.
